# EUROPÄISCHE PATENTSCHRIFT

(11) **EP 2 118 017 B1**
(45) Veröffentlichungstag und Bekanntmachung des Hinweises auf die Patenterteilung: **12.10.2016**
(21) Anmeldenummer: 08708312.7
(22) Anmeldetag: 29.01.2008
(51) Int. Cl.: C01G 41/00

(54) **VERFAHREN ZUR HERSTELLUNG VON AMMONIUMPARAWOLFRAMATHYDRATEN UND AMMONIUMPARAWOLFRAMATDEKAHYDRAT**
METHOD FOR PRODUCING AMMONIUM PARATUNGSTATE HYDRATES AND AMMONIUM PARATUNGSTATE DECAHYDRATE
PROCÉDÉ DE FABRICATION D'HYDRATES DE PARATUNGSTÉNATE D'AMMONIUM ET DÉCAHYDRATE DE PARATUNGSTÉNATE D'AMMONIUM

(30) Priorität: 02.02.2007 DE 102007005286
(43) Veröffentlichungstag der Anmeldung: 18.11.2009
(73) Patentinhaber: H.C. Starck GmbH, 38642 Goslar (DE)
(72) Erfinder: STOLLER, Viktor, 38667 Bad Harzburg (DE); ERB, Michael, 38259 Salzgitter (DE); MEESE-MARKTSCHEFFEL, Juliane, 38642 Goslar (DE); LOHSE, Michael, 38640 Goslar (DE); MARSCHALL, Klaus-Jürgen, 38642 Goslar (DE); SCHRUMPF, Frank, 38642 Goslar (DE)
(86) Internationale Anmeldenummer: PCT/EP2008/050995
(87) Internationale Veröffentlichungsnummer: WO 2008/092837

(56) Entgegenhaltungen:
- DE-B- 1 244 141
- US-A- 4 092 400
- US-A- 4 450 144
- BASU AND F R SALE A K: "Characterization of various commercial forms of ammonium paratungstate powder" J. MATER. SC,, Bd. 10, 1. Januar 1975 (1975-01-01), Seiten 571-577, XP002483351
- W.HAN ET AL.: "Synthesis of the hexagonal form of tungsten trioxide from peroxopolytungstate via ammonium paratungstate decahydrate" BULL. CHEM. SOC. JPN., Bd. 71, 1998, Seiten 933-937, XP002483369
- HEMPEL ET AL: "Löslichkeit und stabile Kristallhydrate im System Ammoniumparawolframat-Wasser" KRISTALL UND TECHNIK,, Bd. 2, Nr. 3, 1. Januar 1967 (1967-01-01), Seiten 437-445, XP002483348

## Beschreibung

Die vorliegende Erfindung betrifft ein neues Verfahren zur Herstellung von hoch reinen Ammoniumparawolframathydraten sowie Ammoniumparawolframatdekahydrat mit einer ausgewählten Kristallstruktur.

Ammoniumparawolframathydrate (nachstehend APW genannt) sind bekannte Zwischenprodukte für die Herstellung von Wolframmetall, von Wolfram enthaltenden Katalysatoren oder von Hartstoffen auf Walframbasis, beispielsweise von Wolframkarbiden.

Die Herstellung von hoch reinem APW erfolgt grundsätzlich über den Säure- bzw. Laugen- bzw. Schmelzaufschluß von Wolfram-haltigen Konzentraten bzw. Wolframschrotten mit angeschlossenen Reinigungsstufen über Fällprozesse und Flüssig-Flüssig-Extraktion. Die gereinigte Lösung wird in der Regel durch Verdampfung aufkonzentriert, wobei schließlich APW auskristallisiert.

In der Veröffentlichung "Kristallographische Untersuchung der Ammoniumparawolframate (Zeitschrift für Kristallographie, Bd. 120, S. 216-228 (1964))" von M. Hähnert ist beschrieben, daß APW x 10 H2O bei langsamem Verdunsten einer Ammoniumwolframatlösung, hergestellt aus WO3 und NH3-Lösung, entsteht. Die Kristalle weisen eine nadelförmige Morphologie auf. Die Schüttdichte des Produktes beträgt 0,7g/cm³. Hierbei handelt es sich nicht um ein großtechnisches Verfahren sondern um ein präparatives Laborverfahren.

Weitere Wege zur Herstellung von APW x 10 H₂O werden in dem Artikel "Characterisation of various commercial forms of ammonium paratungstate powder, Journal of Material Science Nr. 10 (1975), Seite 571 -577" beschrieben.

In einer Verfahrensvariante wird eine Ammoniumwolframatlösung, hergestellt aus W-Säure und NH₃-Lösung im Überschuß, einer Gefriertrocknung unterzogen. Das entstehende Produkt weist eine brüchige schlecht ausgeprägte Kristallmorphologie auf und die Schüttdichte beträgt 1,03 g/cm³. Bei einer zweiten Verfahrensvariante wird eine Ammoniumwolframatlösung, hergestellt wie oben beschrieben, langsam bei Raumtemperatur mit HCl-Lösung neutralisiert. Die entstehenden nadelförmige Kristalle weisen eine Länge von 16-70 µm und eine Breite von 2-14 µm auf und die Schüttdichte beträgt 1,46 g/cm³. Bei beiden Verfahren entsteht APW x 10 H₂O mit geringer Schüttdichte und die notwendige Produktreinheit kann nur unter Einsatz von sauberer W-Säure erreicht werden. Außerdem führt in dem einen Fall die Durchführung einer Gefriertrockung bzw. in dem anderen Fall der Einsatz von sauberer HCl-Lösung zu sehr hohen Prozeßkosten. Bei Verwendung von HCl weist das Produkt verfahrensbedingt eine Chloridverunreinigung auf.

In dem Fachbuch "Metallurgie der seltenen Metalle, Seligman, Krejn und Samsonov (1978), Verlag Metallurgia (UDSSR), S. 62-63" wird ein großtechnisches Verfahren zur Herstellung von APW x 10 H₂O wie folgt beschrieben. Scheelitkonzentrat wird mit HCl-Lösung bei 90-100°C aufgeschlossen, so dass W-Säure entsteht. Die W-Säure wird anschließend mit NH3- Lösung gelöst und die Lösung abgekühlt. Die entstandene Ammoniumwolframatlösung wird unter Rühren langsam mit HCl-Lösung auf einen pH-Wert von 7,3 bis 7,4 neutralisiert. Nach 24-stündiger Standzeit wird das APW x 10 H₂O-Produkt abgetrennt. Die nadelförmigen Kristalle weisen eine Länge von 15-25 µm und eine Breite von 1-3 µm auf und die Schüttdichte beträgt 0,98 g/cm³. Die Kristallisatiansausbeute beträgt hierbei 85-90%. Dieses Produkt enthält noch erhebliche Mengen an Verunreinigungen. Ein weiterer Nachteil dieses Verfahrens ist der hohe Verbrauch an sauberer HCl-Lösung und die große Menge aufzuarbeitender W-haltiger NH₄Cl-Lösung (Mutterlauge).

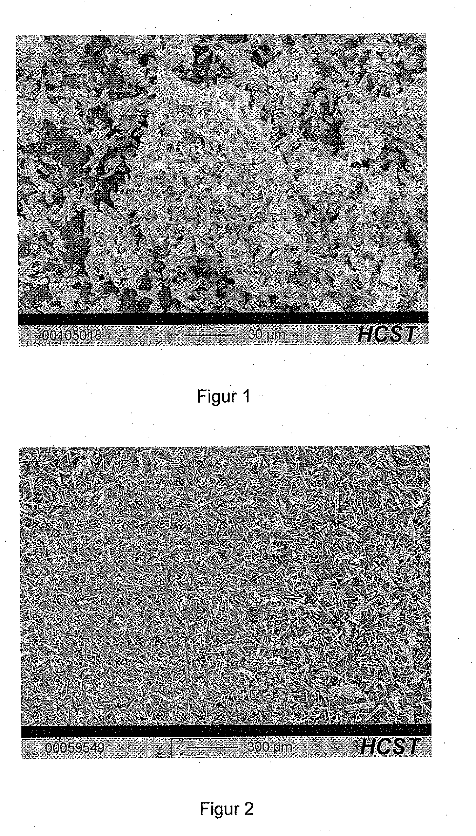

In Figur 1 ist eine Rasterelektronenmikroskop-Aufnahme (REM) eines nach diesem Verfahren hergestellten Produktes dargestellt.

Es ist bekannt, dass zur Herstellung von hochreinen W-Salzen saubere Ammoniumwolframatlösungen eingesetzt werden. Diese Lösungen werden üblicherweise großtechnisch so hergestellt, dass nach dem Natronlauge- bzw. Soda-Aufschluß von W-Konzentraten und anschließender Fällung von P-, As-, Si-, und Mo-Verunreinigungen unter Zusatz von Mg-, Al-Salzen und Natriumhydrogensulfid eine Flüssig--Flüssig-Extraktion unter Verwendung von aminhaltigen organischen Phasen durchgeführt wird. Die parasitäre Entstehung von APW x 10 H₂O bei der Durchführung einer Flüssig-Flüssig Reextraktion mit NH₃-Lösung ist in den US-A-4,450,144 und US-A-4,092,400 erwähnt. Allerdings ist das Ziel dieser Verfahren die Herstellung sauberer Ammonium-wolframatlösung, welche über eine Verdamfungskristallisation zu APW x 4H₂O umgearbeitet werden. Die Bildung von APW x 10 H₂O bei der Reextraktion führt bei den genannten Verfahren zu einer Verschlechterung der Phasentrennung, der Reinheit des APW x 4 H₄O Produktes und der Kristallisationsausbeute. Deshalb werden in den genannten Patentschriften Möglichkeiten beschrieben, wie die Bildung von APW x 10 H₂O-Kristallisen bei der Reextraktion vermindert bzw. vermieden werden kann.

Ein Verfahren zur Herstellung von APW über den Aufschluß von W-haltigen Konzentraten mit angeschlossener Flüssig-Flüssig Extraktion der Wolframverbindungen und nachfolgender Reextraktion mit NH₃-Lösung wird in der DE-AS-1,150,962 beschrieben. Auch hier wird eine organische Aminphase (tertiäres Alkylamin) zur Abtrennung von Wolfram aus W-haltiger Aufschlußlösung verwendet. Nach diesem Verfahren wird, wie dem beigefügten Beispiel entnommen werden kann, die mit 23-27 g/l Wolfram beladene organische Aminphase in eine Absetzvorrichtung, in Form eines langen Turmes, vorgelegt und durch Zutropfen von 5-29 %iger NH₃-Lösung reextrahiert. Die Reextraktion erfolgt bei einem NH₃ : W-Stoffmengenverhältnis der Ausgangslösungen je nach Ausführung zwischen 3,6 : 1 bis 50,1 : 1 und einem Verhältnis von organischer Phase (OP) zu wässeriger NH₃-Lösung zwischen 2,1 bis 5,5 : 1. Das entstehende APW-Produkt wird abschließend filtriert und getrocknet. Die Durchführung der Reextraktion nach diesem Verfahren führt zu feinkristallinem nadelförmigen APW x 10 H₂O-Produk mit an der Oberfläche anhaftender OP und niedriger Schüttdichte von <1,0 g/cm³. In Figur 2 ist eine REM-Aufnahme eines nach diesem Verfahren hergestellten Produktes dargestellt. Eine chemische Analyse des Produktes zeigt einen hohen Anteil an Kohlenstoffverunreinigung von 5000-10000 ppm. Aus diesen Gründen ist das Material für weitere Umarbeitungschritte nicht geeignet. Außerdem erfolgt die Phasentrennung bei der Reextraktion, wie in der Auslegeschrift beschrieben, erst nach langem Stehenlassen. Dies ist auf den feinkristallinen Charakter des Produktes zurückzuführen. Aufgrund des hohen W-Gehaltes der Mutterlauge, weicher aus dem verwendeten NH₃ :W-Stoffmengenverhältnis bei der Reextraktion resultiert, beträgt die Kristallisationsausbeute in diesem Prozeß maximal 65 % (siehe o:g. Veröffentlichung, Versuch 4). Die schlechte Produktqualität, die schlechte Phasentrennung sowie die niedrige Kristallisationsausbeute führten dazu, daß dieses Verfahren bis heute nicht umgesetzt wurde.

Aus diesen Gründen liefen die weiteren Entwicklungen der W-Reextraktion aus aminhaltigen organischen Phasen in Richtung Flüssig-Flüssig Reextraktion mit Vermeidung von APW-Ausfällungen und anschließender APW-Herstellung über Eindampfung der sauberen Ammoniumwolframatreextraktlösungen, wie es in den bereits genannten US-A-4,450,144 und US-A-4,092,400 beschrieben wurde.

Han, et. al beschreiben in "Synthesis of the hexagonal form of tungsten trioxide from peroxopolytungstate via ammonium paratungstate decahydrate", Bull. Chem. Soc, Bd. 71, 1998, Seiten 933-937 die Herstellung von hexagonalen Wolframoxiden über die thermische Zersetzung von Ammoniumwolframaten. Unter anderen wird auch Ammoniumparawolframatdekahydrat eingesetzt. Das nadelförmige Ammoniumparawolframatdekahydrat wird durch Kristallisation und Nachkristallisation von bis zu 40 Stunden gewonnen. Dieses Verfahren ist äußerst aufwendig.

DE 1244141 A beschrebt die Herstellung sauberer Ammoniumwolframatlösungen aus welchen über Verdampfungskristallisation Ammoniumparawolframat gewonnen wird.

Hempel et.al. beschreiben in "Löslichkeit und stabile Kristallhydrate im System Ammoniumparawolframat-Wasser", Kristall und Technik, Bd. 2, Nr.3, 1967, Seiten 437-445, die Herstellung von Ammoniumparawolframatdekahydrat durch langsames Verdunsten einer Ammoniumwolframatlösung Dabei entstehen nadelförmige Ammoniumparawolframat-Kristalle.

Ausgehend von dem Stand der Technik ist es Aufgabe der vorliegenden Erfindung, ein vergleichsweise kostengünsigeres und einfacheres Verfahren zur Verfügung zu stellen, welches es erlaubt, in einem kontinuierlichen Prozeß hoch reines grobkörniges Ammoniumparawolframhydrat mit hoher Kristallisationsausbeute herzustellen.

Eine weitere Aufgabe dieser Erfindung besteht in der Bereitstellung eines Verfahrens zur Herstellung von grobkörnigem Ammoniumparawolframhydrat, bei dem das Produkt direkt bei der Reextraktion kristallisiert.

Noch eine weitere Aufgabe dieser Erfindung besteht in der Bereitstellung eines hoch reinen Ammoniumparawolframatdekahydrates mit ausgewählter Kristallstruktur und hoher Schüttdichte.

Unter Ammoniumparawolframathydrat im Sinne dieser Beschreibung sind das Tetrahydrat, also (NH₄) 10 [H₂W₁₂O₄₂] x 4 (H₂O), und das Dekahydrat, also (NH₄) 10 [H₂W₁₂O₄₂] x 10 (H₂O), zu verstehen. Die Bildung dieser Hydrate erfolgt in Abhängigkeit von der Reextraktionstemperatur.

Im Stand der Technik ist bislang kein Verfahren beschrieben worden, bei dem grobkristallines APW direkt bei der Reextraktion kristallisiert werden kann. Bei den vorbekannten Verfahren fallen Reextraktionslösungen mit einem hohen NH₃: W-Verhältnis an, die in energieaufwendigen Verfahren aufkonzentriert und vom Ammoniaküberschuß befreit werden müssen oder die andere Maßnahmen zur Einstellung des erforderlichen pH-Wertes, z.B. durch Ansäuern mit einer Mineralsäure, verlangen. In einem anderen Verfahren wird zwar APW direkt bei der Reextraktion kristallisiert, das Produkt ist jedoch sehr feinkristallin und nur schwierig von organischen Verunreinigungen zu befreien bzw. weist nur eine geringe Reinheit auf. Außerdem ist die resultierende Kristallisationsausbeute bei diesem Verfahren sehr niedrig.

Überraschenderweise wurde jetzt ein Verfahren gefunden, das die Gewinnung von grobkristallinen hoch reinen APW direkt bei der Reextraktion mit sehr hoher Kristallisationsausbeute gestattet.

Das erfindungsgemäße Verfahren weist neben der Einsparung von Zwischenschritten und der damit verbundenen Einsparung von Energie und Apparaturen noch weitere Vorteile auf. Es läßt sich einfach durchführen und die einzusetzende Menge an Ammoniak ist erheblich geringer als bei bekannten Verfahren.

Die vorliegende Erfindung betrifft ein Verfahren zur kontinuierlichen Herstellung von APW direkt bei der Reextraktion einer mit Wolfram beladenen organischen Phase (OP) mit einer Ammoniak enthaltenden wässerigen Lösung (AP) in einer Mixer-Settler-Vorrichtung, dadurch gekennzeichnet, dass die Reextraktion bei einem NH₃ : W Stoffmengenverhältnis von 0,83 bis 1,30, bevorzugt 0,85 bis 0,95, einem OP : AP-Volumendosierverhältnis der Edukte von 5 bis 25, bevorzugt 10 bis 15, durchgeführt wird.

In einer bevorzugten Ausführungsform wird die Reextraktion im Mixer so durchgeführt, dass sich eine APW Feststoffkonzentration, bezogen auf die wässerige Phase im Mixer, von 100 bis 1200 g/l, bevorzugt 500 bis 800 g/l, einstellt.

Die Rührgeschwindigkeit im Mixer wird so eingestellt, dass die Verteilung von organischer Phase und Ammoniak enthaltender wässeriger Phase nicht homogen ist.

Die OP und AP-Dosierung erfolgt im allgemeinen in der unteren Hälfte des Mixers, bevorzugt in den Rührerbereich, und das entstehende Dreiphasengemisch wird aus dem oberen Bereich, bevorzugt durch einen freien Überlauf, und aus dem unteren Bereich, bevorzugt aus dem Rührerbereich, entnommen, so dass sich ein stationäres OP : AP-Phasenverhältnis im Mixer zwischen 1:5 und 1:70 einstellt.

Die Phasentrennung erfolgt vorzugsweise in einer mit Rührer ausgestatteten nachgeschalteten Settlervorrichtung unter langsamen Rühren, wobei die Drehzahl der Rührvorrichtung so eingestellt wird, dass bei der Sedimentation des APW mitgeschleppte OP von der APW-Phase abgetrennt wird. Das Phasengemisch aus dem Mixer wird vorzugsweise in den OP-AP-Phasengrenzbereich des Settlers eingeleitet.

Ein Anteil der nach der Phasenauftrennung entstehenden wässerigen Phase (Mutterlauge) wird vorzugsweise in den Mixer zurückgeführt, so dass sich eine APW-Feststoffkonzentration im Mixer zwischen 100-1200 g/l, bevorzugt 500-800 g/l, einstellt.

Die Dosiergeschwindigkeiten der Eduktlösungen zur Reextraktion werden vorzugsweise so gewählt, dass sich eine OP-Verweilzeit im Mixer von mindestens einer Minute und sich eine AP-Verweilzeit von mehr als 3 Stunden einstellt, wobei unter OP-Verweilzeit das 60-fache Verhältnis des Volumens der OP-Phase im Mixer in Liter zur Dosiergeschwindigkeit der OP in Liter/Stunde und unter AP-Verweilzeit das Verhältnis des Volumens der AP-Phase im Mixer in Liter zur Dosiergeschwindigkeit der AP in Liter/Stunde zu verstehen ist.

Die Idee des bevorzugt ausgeführen erfindungsgemäßen Verfahrens besteht darin, bei der Reextration einer mit Wolfram beladenen organischen Phase eine über die Höhe des Mixers inhomogene Phasenverteilung zwischen organischer und wässeriger Phase einzustellen, ein ausgewähltes Dosierverhältnis der Edukte sowie ein ausgewähltes Stoffmengenverhältnis von Ammoniak und Wolfram in den der Extraktionsvorrichtung zugeführten Stoffströmen einzustellen und eine ausgewählte Verweilzeit der wässerigen und der organischen Phase in der Extraktionsvorrichtung zu gewährleisten.

Überraschenderweise stellte sich heraus, dass die Durchführung der Reextraktion mit niedrigem NH₃ : W-Stoffmengenverhältnis, hohem Anteil an wässeriger Phase im stationärem Phasengemisch im Mixer bei inhomogener Phasenverteilung und einem hohen APW-Festsfoffanteil zu einem hoch reinen grobkörnigen APW-Produkt führt.

Auch überraschenderweise läßt sich durch kombinierte Entnahme des Phasengemisches aus dem oberen Drittel und aus dem Rührerbereich des Mixers bei geeignet gewählten Mengenverhältnissen beider Ableitströme und in Kombination mit der Rührerdrehzahl das benötigte stationäre Phasenverhältnis im Mixer unabhängig vom Dosierverhältnis der OP/AP-Eduktlösungen einstellen.

Die Durchführung des erfindungsgemäßen Verfahrens erfolgt bevorzugt in einer Mixervorrichtung, welche mit regelbarem Rührer und kombinierter Produktentnahme, aus dem oberen Bereich, bevorzugt durch einen freien Überlauf, und aus dem unteren Bereich, bevorzugt aus dem Rührerbereich, und einer Settlervorrichtung, welche mit einem langsam laufenden Krälwerk ausgestattet ist.

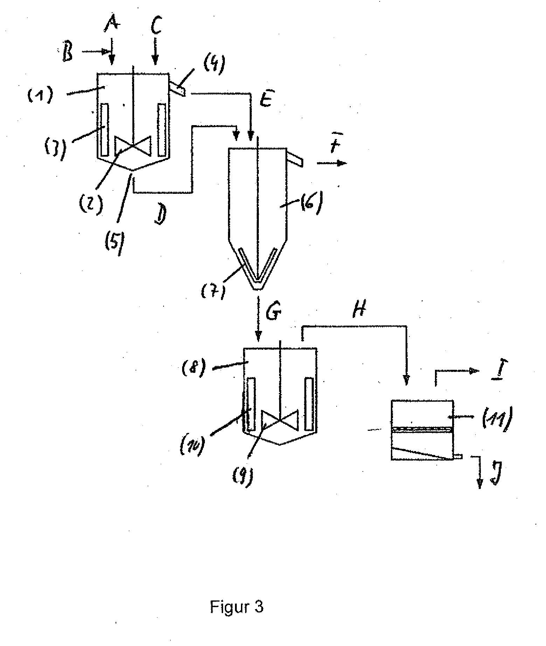

Eine bevorzugte Ausführungsvariante zur Durchführung des erfindungsgemäßen Verfahrens ist in Figur 3 dargestellt.

Es hat sich herausgestellt, dass sämtliche in Anspruch 1 beschriebenen Maßnahmen des erfindungsgemäßen Verfahrens für das Erreichen des angestrebten Zweckes wesentlich sind und dass die in den Unteransprüchen beschriebenen Maßnahmen des erfindungsgemäßen Verfahrens für das Erreichen des angestrebten Zweckes besonders förderlich sind.

So führt ein NH₃ : W-Stoffmengenverhältnis von <0,83 neben der Verschlechterung der Reextraktionsausbeute und Phasentrennung zur Bildung von Ablagerungen an mit OP kontaktierten Anlagenteilen. Ein NH₃ : W-Stoffmengenverhältnis von >1,30 führt zur Verminderung der Kristallisationsausbeute und Verschlechterung der Produktreinheit.

Ein stationäres Verhältnis im Mixer von OP : AP von >1:5 führt zur Bildung von feinkristallinem nadelförmigen Produkt mit sehr hohem Anteil an Kohlenstoffverunreinigung und zur Verschlechterung der Phasentrennung. Ein stationäres OP:AP-Verhältnis im Mixer von <1 : 70 hingegen führt zur Verminderung der Reextraktionsausbeute und zur Bildung von Ablagerungen an mit OP kontaktierten Anlagenteilen.

Die Einstellung eines OP/AP-Phasendosierverhältnisses der Edukte <5 : 1 führt zur Entstehung einer metastabilen wässerigen Phase, welche zur Kristallisation von APW an den Apparate-/Rohrwandungen führt. Ein Phasenverhältnis von >25 : 1 hingegen führt zu einem drastischen Anstieg von Verunreinigungsgehalten im Produkt.

Bei homogener Phasenverteilung im Mixer ist die vom Phasendosierverhältnis der Edukte unabhängige stationäre Phasenverhältniseinstellung im Mixer nicht möglich.

Von der Reextraktionstemperatur ist die Art des entstehenden APW abhängig. Bei Temperaturen bis zu 60°C entsteht das Dekahydrat, während bei Temperaturen oberhalb von 60°C das Tetrahydrat entsteht. Die bevorzugte Temperatur für die Herstellung von Dekahydrat beträgt 45 bis 55°C und für die Herstellung von Tetrahydrat 80 bis 98°C.

In einer bevorzugten Variante des erfindungsgemäßen Verfahrens wird ein Anteil der nach der Phasenauftrennung im Settler entstehenden wässerigen Phase (Mutterlauge) in den Mixer zurückgeführt, so dass sich eine APW-Feststoffkonzentration im Mixer zwischen100 bis 1200 g/l, bevorzugt 500 bis 800 g/l, einstellt.

Ein stationärer Feststoffgehalt im Behälter von <100 g/l führt zur Bildung von Ablagerungen an den Apparate-/Rohrwandungen. Ein stationärer Feststoffgehalt im Behälter von >1200 g/l hingegen führt zum Anstieg von Kohlenstoffverunreinigungen im Produkt, zur Verschlechterung der Phasentrennung und zu feinkristallinen Endprodukten.

In einer ebenfalls bevorzugten Variante des erfindungsgemäßen Verfahrens erfolgt die Dosierung der Ausgangslösung und der Ammoniak enthaltenden wässerigen Lösung in den Rührerbereich des Mixers. Eine Dosierung der Ausgangslösung und der Ammoniak enthaltenden wässerigen Lösung(en) in den Rührerbereiches führt zur Verbesserung der Reextraktionsausbeute und zur Verringerung von Ablagerungen an den Apparate-/Rohrwandungen.

In einer weiteren bevorzugten Variante des erfindungsgemäßen Verfahrens werden die Dosiergeschwindigkeiten der Eduktlösungen zur Reextraktion so gewählt, dass sich eine OP-Verweilzeit im Mixer von mindestens einer Minute und eine AP-Verweilzeit von mehr als drei Stunden einstellt, wobei unter OP-Verweilzeit das 60-fache Verhältnis des Volumens der OP-Phase im Mixer in Liter zur Dosiergeschwindigkeit der OP in Liter/Stunde und unter AP-Verweilzeit das Verhältnis des Volumens der AP-Phase im Mixer in Liter zur Dosiergeschwindigkeit der AP in Liter/Stunde zu verstehen ist.

Eine OP-Verweilzeit im Mixer von weniger als 1 Minute führt zur Verminderung der Reextraktionstausbeute und zur Bildung von Ablagerungen an mit OP kontaktierten Anlagenteilen. Eine OP-Verweilzeit im Behälter von mehr als 10 Minuten ist aufgrund der Verschlechterung der Raum-Zeit-Ausbeute nicht günstig.

Eine AP-Verweilzeit im Mixer von weniger als 3 Stunden führt zu feinkristallinem Produkt, zur Verminderung der Kristallisationsausbeute und zur Bildung von Ablagerungen an den Apparate-/Rohrwandungen. Eine AP-Verweilzeit im Mixer von mehr als 10 Stunden hingegegen führt bei vergleichbaren Produkteigenschaften und Kristallisationsausbeuten zur Verringerung der Raum-Zeit-Ausbeute.

Die Einleitung des Phasengemisches aus dem Mixer in den Settler erfolgt vorteilhafterweise in der Nähe des OP/AP-Phasengrenzbereiches, so dass bei der APW-Sedimentation ein Mitschleppen von OP drastisch reduziert wird. Außerdem erfolgt die Phasentrennung unter langsamen Rühren, so dass vom Produkt mitgeschleppte OP-Anteile abgetrennt werden.

Weiterhin führt das Auftrennen des Phasengemisches unter langsamen Rühren zur deutlichen Verminderung der Trennzeit und damit zur Vergrößerung der Raum-Zeit-Ausbeute im Settler.

Die organische Phase besteht z. B. aus 7 Gew.% Diisotridecylamin, 10 bis 15 Gew.% Isodecanol und 78-83 Gew.% eines aliphatischen Kohlenwasserstoffgemisches (z. B. Testbenzin K60) und wird auf für den Fachmann bekannte Weise mit 40 bis 80 g/l Wolfram, bevorzugt 60 bis 70 g/l, beladen. Außer sekundären Aminen können auch tertiäre Amine bzw. quatäre Ammoniumsalze und andere Modifyer anstelle von Isodecanol sowie andere Kohlenwasserstoffgemische auch mit anderen Zusammensetzungsverhältnissen eingesetzt werden.

Die Erfindung betrifft auch ein neues Ammoniumparawolframatdekahydrat, das zu mindestens 75% aus Kristallen mit einer Länge von mindestens 200 µm besteht, die ein Verhältnis von Länge zu Breite von <4,5 : 1 aufweisen. Ein solches Produkt kann mit dem oben beschriebenen Verfahren hergestellt werden. Im Gegensatz zu vorbekannten Produkten ist dieses Produkt bedeutend grobkörniger, weist weniger Verunreinigungsanteile auf und lässt sich besser weiterverarbeiten.

Das erfindungsgemäße Ammoniumparawolframatdekahydrat weist vorzugsweise eine Schüttdichte von mindestens 1,7 g/cm³, insbesondere von 1,8 bis 2,2 g/cm³, auf. Solche Schüttdichten konnten bei diesem Produkt bislang nicht erzielt werden.

Die Schüttdichte wurde gemäß ASTM B329 ermittelt.

Bevorzugt besitzt das Ammoniumparawolframatdekahydrat eine Länge von 200 bis 1000 µm, besonders bevorzugt von 300 bis 400 µm.

Ebenfalls bevorzugt besitzt das Ammoniumparawolframatdekahydrat eine Länge von 300 bis 400 µm und ein Verhältnis von Länge zu Breite von 3,0:1 bis 3,5:1.

Dieses Ammoniumparawolframatdekahydrat ist besonders als hoch reines Produkt bevorzugt, beispielsweise charakterisiert durch eine Reinheit von mindestens 99,99 %, bezogen auf die Gesamtmasse des Produkts.

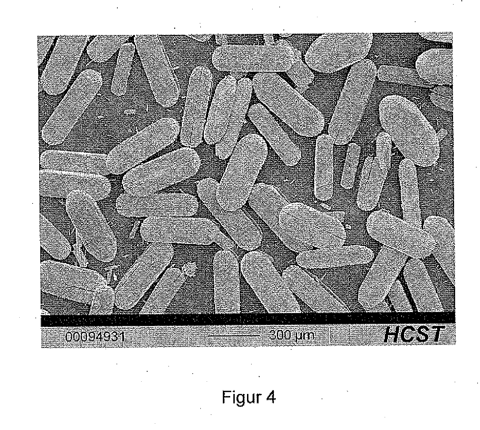

In Figur 4 und dem nachstehenden Ausführungsbeispiel wird die Erfindung beschrieben. Eine Begrenzung auf dieses Beispiel und diese Figur ist dadurch nicht beabsichtigt.

Es zeigen:
Figur 1: Ein gemäß "Metallurgie der seltenen Metalle, Seligman, Krejn und Samsonov (1978), Verlag Metallurgia (UDSSR), S. 62-63" hergestelltes feinkristallines Ammoniumparawolframatdekahydrat
Figur 2: Ein gemäß DE-AS-1,150,962 hergestelltes feinkristallines Ammoniumparawolframatdekahydrat
Figur 3: Eine Ausführungsform des erfindungsgemäßen Verfahrens zur Herstellung von APW
Figur 4: Ein gemäß dem erfindungsgemäßen Verfahren hergestelltes APW-Dekahydrat (Rasterelektronenmikroskopaufnahme (REM))
Figur 5: Ein gemäß dem erfindungsgemäßen Verfahren hergestelltes APW-Dekahydrat (Röntgenbeugungsaufnahme (RBA))

### Ausführungsbeispiel:

W-Konzentrat wurde mit Natronlauge aufgeschlossen und die entstehende Lauge unter Zusatz von Mg-, Al-Salzen und Natriumhydrogensulfid von Verunreinigungen, wie P, As, Si, V und Mo, vorgereinigt. Als weiterer Reinigungsschritt von noch enthaltenen anionischen und kationischen Verunreinigungen wurde eine Flüssig-Flüssig-Extraktion unter Verwendung einer organischen Phase (7-10 Gew.% Diisotridecylamin, 10 Gew.% Isodecanol, Rest Testbenzin) durchgeführt. Die mit Wolfram beladene OP wurde mit NH₃-Lösung reextrahiert. Die dazu verwendete Vorrichtung ist in Figur 3 dargestellt.

In ein mit Rührer (2), Stromstörern (3) ausgestattetes Rührgefäß (1) (auch Mixer genannt) (Volumen: 250 I, Durchmesser: 600mm, Schrägblattrührer: 6 Flügel, Durchmesser: 300mm, 4 Stromstörer) wurden über Leitungen A, B und C kontinuierlich 400 I/h W-beladene OP und eine geregelte Menge NH₃-Lösung in den Rührbereich dosiert. Über Leitung B wurde Wasser zugeführt. Die W-Konzentration der OP und die NH₃- Konzentration der NH₃-Lösung wurden inline automatisch gemessen. Die Dosierung der NH₃-Lösung wurde über das auf 0,90 festgelegte NH₃ : W-Stoffmengenverhältnis automatisch geregelt. Das OP/(NH₃-Lösung + Wasser)-Dosierverhältnis wurde auf 15 : 1 eingestellt und über den Wasserstrom (B) in die NH₃-Dosierleitung (A) ebenfalls automatisch geregelt.

Der Volumenstrom der OP (durchschnittliche W-Beladung: 62,0 g/l) wurde fest eingestellt. Der Volumenstrom der NH₃-Lösung wurde in Abhängigkeit vom Volumenstrom der OP, der aktuell gemessenen W- und NH₃₋Konzentrationen und dem eingestellten NH₃ : W-Stoffmengenverhältnis geregelt. Der H₂O-Volumenstrom wurde in Abhängigkeit vom Volumenstrom der NH₃-Lösung und dem eingestellten Dosierverhältnis der Edukte geregelt. Die Temperatur im Mixer (1) wurde auf 50°C eingestellt und über die Temperierung der Eduktlösungen geregelt.

Die Überführung des im Mixer (1) entstandenen 3-Phasengemisches in den Settler (6) erfolgte aus dem Rührerbereich des Behälters über den Ablauf (5) und Leitung D sowie über den freien Überlauf (4) des Behälters und Leitung E.

Das stationäre OP/AP-Verhältnis von 1/8 im Mixer (1) und die stationäre Feststoffkonzentration von 750 g/l bezogen auf die wässerige Phase (NH₃-Lösung + Mutterlauge + Wasser) wurde über die Rührerdrehzahl (210 upm), die Phasengemischentnahme aus dem unteren Mixerbereich (50 l/h) und die Rückführung von wässeriger Phase (Mutterlauge) aus dem Settler (6) in den Mixer (1) (20 l/h) eingestellt. Die Verweilzeit der AP im Mixer (1) betrug bezogen auf den stationären AP-Anteil im Mixer 4,8 Stunden und der OP bezogen auf den stationären OP-Anteil im Mixer 4,2 Minuten. Das Phasengemisch wurde im mit einem Krälwerk (7) ausgestatteten Settler (6) (Volumen: 6001, Durchmesser: 750 mm (Form: ab halber Höhe konisch zulaufend; ausgestattet mit einem Krälwerk des Typs wandläufiger Anker (schräg zulaufend)) aufgetrennt. Die Krälwerkdrehzahl wurde auf 15 upm eingestellt. Die entladene OP wurde über den Überlauf des Settiers über Leitung F abgetrennt, mit Wasser gewaschen und zur Beladungsstufe der Flüssig-Flüssig Extraktion zurückgeführt. Die Produktsuspension mit einem APW-Feststoffgehalt von 1314 g/l wurde aus dem unteren Bereich des Settlers (6) über Leitung G in einen mit Rührer (9) und Stromstörern (10) ausgestatteten Zwischenbehälter (8) als Puffergefäß vor der Filtration übergeführt. Daraus wurde die wässerige APW-Suspension über Leitung H in den Filter (11) übergeführt und das APW x 10 H₂O mit wenig Wasser gewaschen, um die Mutterlauge zu verdrängen. Das Produkt wurde aus der Nutsche entnommen, abschließend bei 50°C getrocknet und charakterisiert.

Die Mutterlauge mit 35 g/l W und 7,0 g/l NH₃ wurde aus dem Filter (11) über Leitung J abgeführt und nach Abtrennung des NH₃ zur Aufschlußlösung der W-Konzentrate gegeben. Die Kristallisationsausbeute beträgt bezogen auf den W-Gehalt der OP 96,2%.

Das gemäß diesem Ausführungsbeispiel erhaltene APW x 10 H₂O zeichnete sich durch eine sehr hohe Reinheit von >99,99% aus. Die Analysen verschiedener Tageschargen dieses Produktes findet sich in der nachstehenden Tabelle. In Figur 4 ist eine REM-Aufnahme des im Ausführungsbeispiel hergestellten Produktes dargestellt.

**Tabelle: Chemische Analyse und Schüttdichte verschiedener Tageschargen des gemäß dem Ausführungsbeispiel hergestellten Produktes.**

| | W | NH₃ | F | C | P | Si | Al | Ca | Cr | Fe | K | Li | Mo | Na | V | Schüttdichte |
|---|---|---|---|---|---|---|---|---|---|---|---|---|---|---|---|---|
| Probe | [%] | [%] | [ppm] | [ppm] | [ppm] | [ppm] | [ppm] | [ppm] | [ppm] | [ppm] | [ppm] | [ppm] | [ppm] | [ppm] | [ppm] | [g/cm³] |
| 1 | 68,36 | 5,23 | <10 | 18 | <1 | <2 | <3 | <3 | <2 | <2 | <1 | <1 | <3 | <1 | <1 | 1,98 |
| 2 | 68,63 | 5,24 | <10 | 29 | <1 | <2 | <3 | <3 | <2 | <2 | <1 | <1 | <3 | <1 | <1 | 2,12 |
| 3 | 68,67 | 5,27 | <10 | 23 | <1 | <2 | <3 | <3 | <2 | <2 | <1 | <1 | <3 | <1 | <1 | 1,79 |

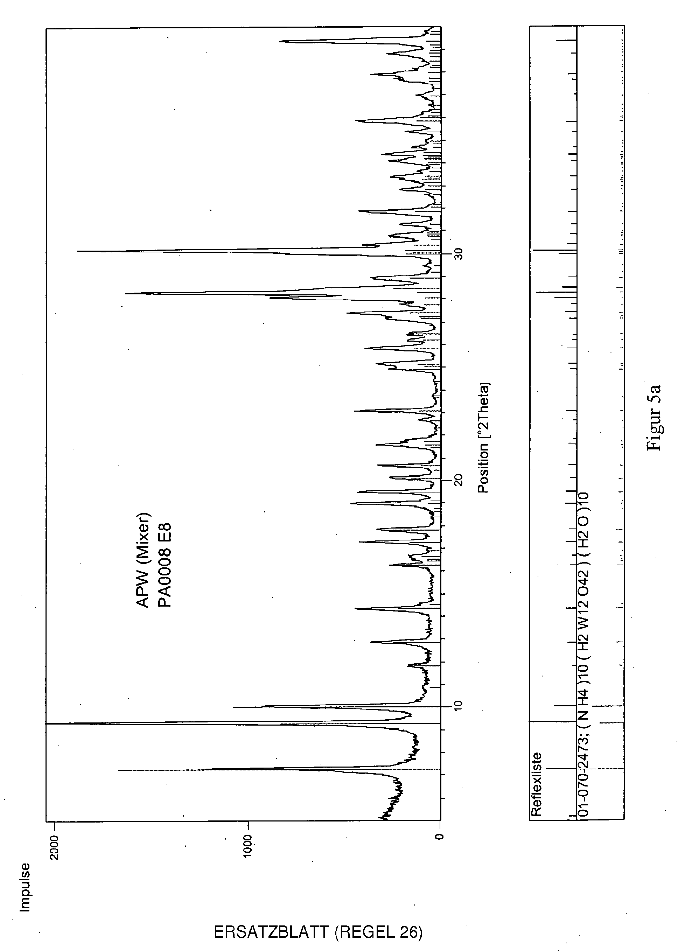

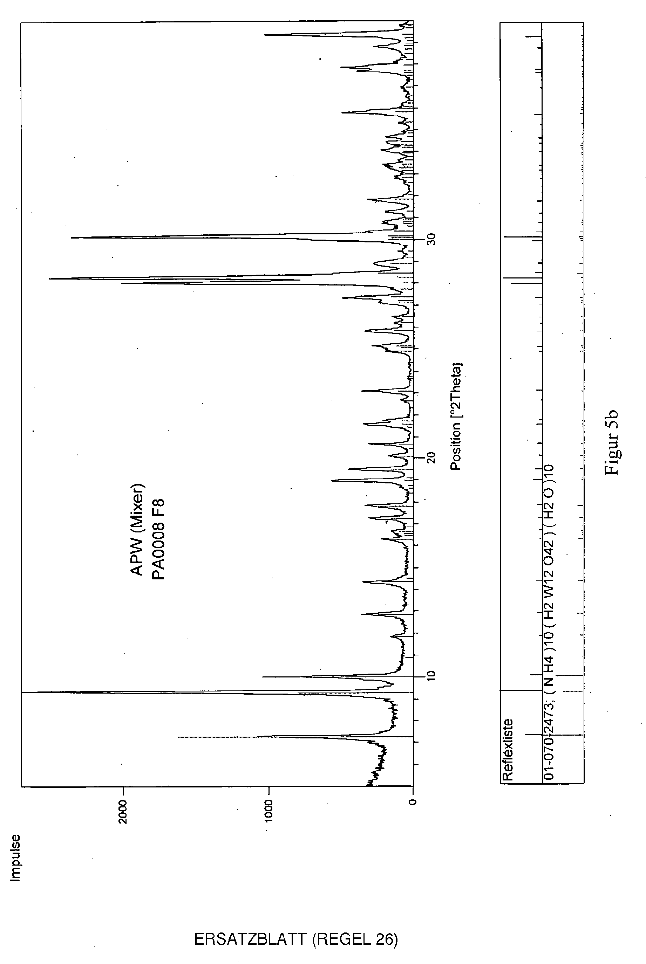

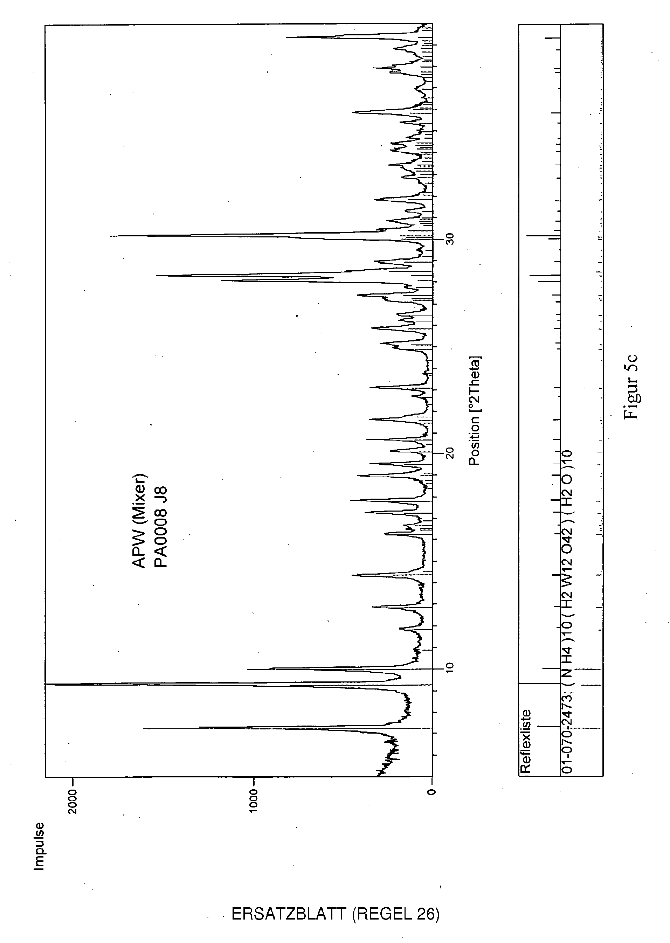

In den Figuren 5a bis 5c sind die zugehörigen Röntgenbeugungsaufnahmen (RBA) der drei Proben abgebildet.

## Patentansprüche

1. Verfahren zur kontinuierlichen Herstellung von Ammoniumparawolframathydrat direkt bei der Reextraktion einer mit Wolfram beladenen organischen Phase mit einer Ammoniak enthaltenden wässerigen Lösung in einer Mixer-Settler Vorrichtung, **dadurch gekennzeichnet, dass** die Reextraktion bei einem NH₃ : W-Stoffmengenverhältnis von 0,83 bis 1,30 und bei einem Volumendosierverhältnis der mit Wolfram beladenen organischen Phase zur Ammoniak enthaltenden wässerigen Lösung von 5 bis 25 durchgeführt wird.

2. Verfahren nach Anspruch 1, **dadurch gekennzeichnet, dass** die Reextraktion bei einem NH₃ : W-Stoffmengenverhältnis von 0,85 bis 0,95 und bei einem Volumendosierverhältnis der mit Wolfram beladenen organischen Phase zur Ammoniak enthaltenden wässerigen Lösung von 10 bis 15 durchgeführt wird.

3. Verfahren nach Anspruch 1, **dadurch gekennzeichnet, dass** die Reextraktion im Mixer so durchgeführt wird, dass sich eine Feststoffkonzentration des Ammoniumparawolframathydrats, bezogen auf die Ammoniak enthaltende wässerige Phase im Mixer, von 100 bis 1200 g/l, bevorzugt 500 bis 800 g/l, einstellt.

4. Verfahren nach einem der Ansprüche 1 bis 3, **dadurch gekennzeichnet, dass** im Mixer die Rührgeschwindigkeit so eingestellt wird, dass eine nicht homogene Verteilung von organischer Phase und Ammoniak enthaltender wässeriger Phase im Mixer erreicht wird.

5. Verfahren nach einem der Ansprüche 1 bis 4, **dadurch gekennzeichnet, dass** die Dosierung der mit Wolfram beladenen organischen Phase und der Ammoniak enthaltenden wässerigen Lösung in der unteren Hälfte des Mixers, bevorzugt in den Rührerbereich, erfolgt und dass das entstehende Dreiphasengemisch kombiniert aus dem oberen Bereich, bevorzugt durch einen freien Überlauf, und aus dem unteren Bereich, bevorzugt aus dem Rührerbereich, des Mixers entnommen wird, so dass sich im Mixer ein stationäres Verhältnis von mit Wolfram beladener organischer Phase und von Ammoniak enthaltender wässeriger Lösung zwischen 1:5 und 1:70 einstellt.

6. Verfahren nach einem der Ansprüche 1 bis 5, **dadurch gekennzeichnet, dass** das Auftrennen des Phasengemisches in einem mit Rührvorrichtung ausgestattetem Settler unter Rühren erfolgt und dass die Drehzahl der Rührvorrichtung so eingestellt wird, dass bei der Sedimentation des Ammoniumparawolframathydrats mitgeschleppte organische Phase abgetrennt wird, wobei das Phasengemisch aus dem Mixer vorzugsweise in den Phasengrenzbereich zwischen organischer Phase und wässeriger Phase des Settlers eingeleitet wird.

7. Verfahren nach einem der Ansprüche 1 bis 6, **dadurch gekennzeichnet, dass** ein Anteil der nach der Phasenauftrennung entstehenden Mutterlauge in den Mixer geführt wird, so dass eine Feststoffkonzentration von Ammoniumparawolframathydrat im Mixer zwischen 100-1200 g/l, bevorzugt 500-800 g/l, eingestellt wird.

8. Verfahren nach einem der Ansprüche 1 bis 7, **dadurch gekennzeichnet, dass** die Dosiergeschwindigkeiten der mit Wolfram beladenen organischen Phase und Ammoniak enthaltenden wässerigen Lösung zur Reextraktion so gewählt werden, dass sich eine Verweilzeit der organischen Phase im Mixer von mindestens einer Minute und eine Verweilzeit der Ammoniak enthaltenden wässerigen Phase im Mixer von mehr als drei Stunden einstellt, wobei unter Verweilzeit der organischen Phase das 60-fache Verhältnis des Volumens der organischen Phase im Mixer in Liter zur Dosiergeschwindigkeit der mit Wolfram beladenen organischen Phase in Liter/Stunde und unter Verweilzeit der Ammoniak enthaltenden wässerigen Phase das Verhältnis des Volumens der Ammoniak enthaltenden wässerigen Phase im Mixer in Liter zur Dosiergeschwindigkeit der Ammoniak enthaltenden wässerigen Lösung in Liter/Stunde zu verstehen ist.

9. Ammoniumparawolframatdekahydrat, das zu mindestens 75 % aus Kristallen mit einer Länge von mindestens 200 µm besteht, die ein Verhältnis von Länge zu Breite von kleiner als 4,5 : 1 aufweisen.

10. Ammoniumparawolframatdekahydrat nach Anspruch 9, **dadurch gekennzeichnet, dass** dieses eine Schüttdichte von mindestens 1,7 g/cm³, vorzugsweise 1,8 bis 2,2 g/cm³, aufweist.

11. Ammoniumparawolframatdekahydrat nach Anspruch 9, **dadurch gekennzeichnet, dass** mindestens 75 % der Kristalle eine Länge von 200 bis 1000 µm, vorzugsweise 300 bis 400 µm, aufweisen.

12. Ammoniumparawolframatdekahydrat nach Anspruch 9, **dadurch gekennzeichnet, dass** mindestens 75 % der Kristalle eine Länge von 300 bis 400 µm und ein Verhältnis von Länge zu Breite von 3,0 bis 3,5 : aufweisen.

13. Ammoniumparawolframatdekahydrat nach einem der Ansprüche 9 bis 12, **dadurch gekennzeichnet, dass** dieses eine Reinheit von mindestens 99,99%, bezogen auf die Gesamtmasse des Produkts aufweist.

## Claims

1. Process for the continuous preparation of ammonium paratungstate hydrate directly in the reextraction of a tungsten-laden organic phase with an ammonia-containing aqueous solution in a mixer-settler apparatus, **characterized in that** the reextraction is carried out at an NH₃:W molar ratio of from 0.83 to 1.30, and a volume feed ratio of the tungsten-laden organic phase to the ammonia-containing aqueous solution of from 5 to 25.

2. Process according to Claim 1, **characterized in that** the reextraction is carried out at an NH₃:W molar ratio of from 0.85 to 0.95 and a volume feed ratio of the tungsten-laden organic phase to the ammonia-containing aqueous solution of from 10 to 15.

3. Process according to Claim 1, **characterized in that** the reextraction in the mixer is carried out so that a solids concentration of the ammonium paratungstate hydrate, based on the ammonia-containing aqueous phase in the mixer, of from 100 to 1200 g/l, preferably from 500 to 800 g/l, is established.

4. Process according to any of Claims 1 to 3, **characterized in that** the stirrer speed in the mixer is set so that an inhomogeneous distribution of organic phase and ammonia-containing aqueous phase is obtained in the mixer.

5. Process according to any of Claims 1 to 4, **characterized in that** the tungsten-laden organic phase and the ammonia-containing aqueous solution are introduced into the lower half of the mixer, preferably in the stirrer region, and **in that** the three-phase mixture formed is taken off both from the upper region, preferably via a free overflow, and from the lower region, preferably from the stirrer region, of the mixer, so that a stationary ratio of tungsten-laden organic phase and ammonia-containing aqueous solution in the range from 1:5 to 1:70 is established in the mixer.

6. Process according to any of Claims 1 to 5, **characterized in that** the separation of the phase mixture is carried out with stirring in a settler provided with a stirrer and **in that** the rotational speed of the stirring apparatus is set so that the organic phase entrained in the sedimentation of the ammonium paratungstate hydrate is separated off, with the phase mixture from the mixer preferably being introduced into the phase boundary region between organic phase and aqueous phase of the settler.

7. Process according to any of Claims 1 to 6, **characterized in that** a proportion of the mother liquor formed after the phase separation is fed into the mixer so that a solids concentration of ammonium paratungstate hydrate of 100-1200 g/l, preferably 500-800 g/l, is established in the mixer.

8. Process according to any of Claims 1 to 7, **characterized in that** the feed rates of the tungsten-laden organic phase and ammonia-containing aqueous solution to the reextraction are selected so that a residence time of the organic phase in the mixer of at least one minute and a residence time of ammonia-containing aqueous phase in the mixer of more than three hours is established, with the residence time of the organic phase being 60 times the ratio of the volume of the organic phase in the mixer in liters to the feed rate of the tungsten-laden organic phase in liters/hour and the residence time of the ammonia-containing aqueous phase being the ratio of the volume of the ammonia-containing aqueous phase in the mixer in liters to the feed rate of the ammonia-containing aqueous solution in liters/hour.

9. Ammonium paratungstate decahydrate comprising at least 75% of crystals having a length of at least 200 µm and having a ratio of length to width of less than 4.5:1.

10. Ammonium paratungstate decahydrate according to Claim 9, **characterized in that** it has a bulk density of at least 1.7 g/cm³, preferably from 1.8 to 2.2 g/cm³.

11. Ammonium paratungstate decahydrate according to Claim 9, **characterized in that** at least 75% of the crystals have a length of from 200 to 1000 µm, preferably from 300 to 400 µm.

12. Ammonium paratungstate decahydrate according to Claim 9, **characterized in that** at least 75% of the crystals have a length of from 300 to 400 µm and a ratio of length to width of from 3.0:1 to 3.5:1.

13. Ammonium paratungstate decahydrate according to any of Claims 9 to 12, **characterized in that** it has a purity of at least 99.99%, based on the total mass of the product.

## Revendications

1. Procédé de fabrication continue de paratungstate d'ammonium hydraté directement lors de la réextraction d'une phase organique chargée avec du tungstène avec une solution aqueuse contenant de l'ammoniac dans un dispositif mélangeur-décanteur, **caractérisé en ce que** la réextraction est réalisée à un rapport entre les quantités de matière NH₃:W de 0,83 à 1,30 et à un rapport de dosage volumique de la phase organique chargée avec du tungstène par rapport à la solution aqueuse contenant de l'ammoniac de 5 à 25.

2. Procédé selon la revendication 1, **caractérisé en ce que** la réextraction est réalisée à un rapport entre les quantités de matière NH₃:W de 0,85 à 0,95 et à un rapport de dosage volumique de la phase organique chargée avec du tungstène par rapport à la solution aqueuse contenant de l'ammoniac de 10 à 15.

3. Procédé selon la revendication 1, **caractérisé en ce que** la réextraction est réalisée dans le mélangeur de manière à ajuster une concentration en solides du paratungstate d'ammonium hydraté, par rapport à la phase aqueuse contenant de l'ammoniac dans le mélangeur, de 100 à 1200 g/l, de préférence de 500 à 800 g/l.

4. Procédé selon l'une quelconque des revendications 1 à 3, **caractérisé en ce que** la vitesse d'agitation dans le mélangeur est ajustée de manière à obtenir une distribution non homogène de la phase organique et de la phase aqueuse contenant de l'ammoniac dans le mélangeur.

5. Procédé selon l'une quelconque des revendications 1 à 4, **caractérisé en ce que** le dosage de la phase organique chargée avec du tungstène et de la solution aqueuse contenant de l'ammoniac a lieu dans la moitié inférieure du mélangeur, de préférence dans la zone de l'agitateur, et **en ce que** le mélange triphasé formé est extrait du mélangeur en combinaison à partir de la zone supérieure, de préférence par un déversoir libre, et à partir de la zone inférieure, de préférence à partir de la zone de l'agitateur, de manière à ajuster dans le mélangeur un rapport stationnaire entre la phase organique chargée avec du tungstène et la solution aqueuse contenant de l'ammoniac compris entre 1:5 et 1:70.

6. Procédé selon l'une quelconque des revendications 1 à 5, **caractérisé en ce que** la séparation du mélange de phases a lieu sous agitation dans un décanteur équipé d'un dispositif d'agitation et **en ce que** la vitesse de rotation du dispositif d'agitation est ajustée de sorte que la phase organique entraînée lors de la sédimentation du paratungstate d'ammonium hydraté soit séparée, le mélange de phases issu du mélangeur étant de préférence introduit dans la zone d'interface entre la phase organique et la phase aqueuse du décanteur.

7. Procédé selon l'une quelconque des revendications 1 à 6, **caractérisé en ce qu'**une proportion de la liqueur mère formée après la séparation de phases est introduite dans le mélangeur, de manière à ajuster une concentration en solides de paratungstate d'ammonium hydraté dans le mélangeur comprise entre 100 et 1200 g/l, de préférence entre 500 et 800 g/l.

8. Procédé selon l'une quelconque des revendications 1 à 7, **caractérisé en ce que** les vitesses de dosage de la phase organique chargée avec du tungstène et de la solution aqueuse contenant de l'ammoniac dans la réextraction sont choisies de manière à ajuster un temps de séjour de la phase organique dans le mélangeur d'au moins une minute et un temps de séjour de la phase aqueuse contenant de l'ammoniac dans le mélangeur de plus de trois heures, le temps de séjour de la phase organique désignant 60 fois le rapport entre le volume de la phase organique dans le mélangeur en litre et la vitesse de dosage de la phase organique chargée avec du tungstène en litre/heure et le temps de séjour de la phase aqueuse contenant de l'ammoniac désignant le rapport entre le volume de la phase aqueuse contenant de l'ammoniac dans le mélangeur en litre et la vitesse de dosage de la solution aqueuse contenant de l'ammoniac en litre/heure.

9. Paratungstate d'ammonium décahydraté, qui est constitué à hauteur d'au moins 75 % de cristaux ayant une longueur d'au moins 200 µm, qui présentent un rapport longueur sur largeur inférieur à 4,5:1.

10. Paratungstate d'ammonium décahydraté selon la revendication 9, **caractérisé en ce que** celui-ci présente une densité apparente d'au moins 1,7 g/cm³, de préférence de 1,8 à 2,2 g/cm³.

11. Paratungstate d'ammonium décahydraté selon la revendication 9, **caractérisé en ce qu'**au moins 75 % des cristaux présentent une longueur de 200 à 1000 µm, de préférence de 300 à 400 µm.

12. Paratungstate d'ammonium décahydraté selon la revendication 9, **caractérisé en ce qu'**au moins 75 % des cristaux présentent une longueur de 300 à 400 µm et un rapport longueur sur largeur de 3,0:1 à 3,5:1.

13. Paratungstate d'ammonium décahydraté selon l'une quelconque des revendications 9 à 12, **caractérisé en ce que** celui-ci présente une pureté d'au moins 99,99 %, par rapport à la masse totale du produit.
